(19) Europäisches Patentamt
European Patent Office
Office européen des brevets

(11) **EP 4 462 362 B1**

(12) **EUROPEAN PATENT SPECIFICATION**

(45) Date of publication and mention
of the grant of the patent:
**24.12.2025 Bulletin 2025/52**

(21) Application number: **24171550.7**

(22) Date of filing: **22.04.2024**

(51) International Patent Classification (IPC):
*G06T 7/73* *(2017.01)*

(52) Cooperative Patent Classification (CPC):
**G06T 7/73**; G06T 2207/20081; G06T 2207/20084;
G06T 2207/30252

(54) **AERIAL REFUELING SYSTEMS AND METHODS**

LUFTBETANKUNGSSYSTEME UND -VERFAHREN

SYSTÈMES ET PROCÉDÉS DE RAVITAILLEMENT EN VOL

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **09.05.2023 US 202318314673**

(43) Date of publication of application:
**13.11.2024 Bulletin 2024/46**

(73) Proprietor: **The Boeing Company
Arlington, VA 22202 (US)**

(72) Inventors:
• **HUNG, Fan Hin
Arlington, 22202 (US)**
• **NGUYEN, Leon
Arlington, 22202 (US)**
• **SMITH, Haden
Arlington, 22202 (US)**
• **KHOSLA, Deepak
Arlington, 22202 (US)**
• **RATZLAFF, Neale
Arlington, 22202 (US)**

(74) Representative: **Boult Wade Tennant LLP
Salisbury Square House
8 Salisbury Square
London EC4Y 8AP (GB)**

(56) References cited:
**US-A1- 2022 212 811**

• **GUPTA KARTIK ET AL: "CullNet: Calibrated and Pose Aware Confidence Scores for Object Pose Estimation", 2019 IEEE/CVF INTERNATIONAL CONFERENCE ON COMPUTER VISION WORKSHOP (ICCVW), IEEE, 27 October 2019 (2019-10-27), pages 2758 - 2766, XP033732747, DOI: 10.1109/ICCVW.2019.00337**
• **KLEIN ITZIK ET AL: "Uncertainty in Data-Driven Kalman Filtering for Partially Known State-Space Models", ICASSP 2022 - 2022 IEEE INTERNATIONAL CONFERENCE ON ACOUSTICS, SPEECH AND SIGNAL PROCESSING (ICASSP), IEEE, 23 May 2022 (2022-05-23), pages 3194 - 3198, XP034158705, DOI: 10.1109/ICASSP43922.2022.9746732**
• **GUANYA SHI ET AL: "Fast Uncertainty Quantification for Deep Object Pose Estimation", ARXIV.ORG, CORNELL UNIVERSITY LIBRARY, 201 OLIN LIBRARY CORNELL UNIVERSITY ITHACA, NY 14853, 16 November 2020 (2020-11-16), XP081814947**
• **TENG CHIN-HUNG: "Enhanced outlier removal for extended Kalman filter based visual inertial odometry", 2018 IEEE INTERNATIONAL CONFERENCE ON APPLIED SYSTEM INVENTION (ICASI), IEEE, 13 April 2018 (2018-04-13), pages 74 - 77, XP033362761, DOI: 10.1109/ICASI.2018.8394370**

EP 4 462 362 B1

**Description**

**FIELD**

This disclosure relates generally to aerial refuelling, and more particularly to controlling aerial refuelling operation.

**BACKGROUND**

Automation of aerial refuelling provides safety benefits for a tanker aircraft and a receiver aircraft. However, accurately and efficiently conducting a refuelling operation using cameras can be difficult when practicing current automated techniques.

US 2022/212811, in accordance with its abstract, describes a fuel receptacle and boom tip position and pose estimation for aerial refueling. A video frame is received and within the video frame, aircraft keypoints for an aircraft to be refueled are determined. Based on at least the aircraft keypoints, a position and pose of a fuel receptacle on the aircraft is determined. Within the video frame, a boom tip keypoint for a boom tip of an aerial refueling boom is also determined. Based on at least the boom tip keypoint, a position and pose of the boom tip is determined. Based on at least the position and pose of the fuel receptacle and the position and pose of the boom tip, the aerial refueling boom is controlled to engage the fuel receptacle. Some examples overlay projections of an aircraft model on displayed video for a human observer.

Gupta Kartik et al: "CullNet: Calibrated and Pose Aware Confidence Scores for Object Pose Estimation", 2019 IEEE/CVF International Conference on Computer Vision Workshop (ICCVW), IEEE, 27 October 2019, pages 2758-2766, in accordance with its abstract, describes an approach for single view, image-based object pose estimation in real time. Specifically, the problem of culling false positives among several pose proposal estimates is addressed in this paper. The proposed approach targets the problem of inaccurate confidence values predicted by CNNs which is used by many current methods to choose a final object pose prediction. A new network is presented called CullNet, solving this task. CullNet takes pairs of pose masks rendered from a 3D model, and cropped regions in the original image as input. This is then used to calibrate the confidence scores of the pose proposals. This new set of confidence scores is found to be significantly more reliable for accurate object pose estimation. The experimental results on multiple challenging datasets (LINEMOD and Occlusion LINEMOD) clearly reflects the utility of the proposed method. The overall pose estimation pipeline outperforms state-of-the-art object pose estimation methods on these standard object pose estimation datasets.

**SUMMARY**

The subject matter of the present application has been developed in response to the present state of the art, and in particular, in response to the shortcomings of conventional aerial refuelling techniques, that have not yet been fully solved by currently available techniques. Accordingly, the subject matter of the present application has been developed to provide systems and methods for providing aerial refuelling techniques that overcome at least some of the above-discussed shortcomings of prior art techniques.

The scope of this patent is defined by the appended set of claims. There is disclosed herein a method comprising: receiving a two-dimensional (2D) image from a camera; determining 2D keypoints of a target object located within the 2D image based on a predefined model of the target object; estimating a 6 degrees-of-freedom (DoF) pose based on the 2D keypoints and a three-dimensional model of the target object; and generating an uncertainty value of the 6 degrees-of-freedom pose. The method further comprises: determining the 2D keypoints using a trained neural network configured to output keypoint heat maps, wherein pixel intensity values associated with each of the keypoint heat maps indicate a keypoint detection probability; computing covariance of each of the keypoint heat maps; computing reprojection errors as the 2D distance between the i-th estimated 2D keypoint and the 2D projection of the i-th 3D model keypoint, using the solved 6DOF pose; scaling the covariance of the keypoint heat maps based on the reprojection errors to produce scaled covariance; generating samples of new keypoints based on the scaled covariance; generating a new 6 degrees-of-freedom pose based on the samples of new keypoints, wherein generating the uncertainty value comprises computing a standard deviation of the new 6 degrees-of-freedom pose; and a vehicle system using the uncertainty value of the 6 degrees-of-freedom pose to determine whether the uncertainty value exceeds a threshold thereby indicating unacceptable uncertainty in the estimated 6 degrees-of-freedom pose.

The described features, structures, advantages, and/or characteristics of the subject matter of the present disclosure may be combined in any suitable manner in one or more examples. In the following description, numerous specific details are provided to impart a thorough understanding of examples of the subject matter of the present disclosure. One skilled in the relevant art will recognize that the subject matter of the present disclosure may be practiced without one or more of the specific features, details, components, materials, and/or methods of a particular example. In other instances, additional features and advantages may be recognized in certain examples that may not be present in all examples. Further, in some instances, well-known structures, materials, or operations are not shown or described in detail to avoid obscuring features of the subject matter of the present disclosure. The features and advantages of the subject matter of the present disclosure will become more fully apparent from the following description and appended claims or may be learned by the practice of the subject matter as set forth hereinafter.

## BRIEF DESCRIPTION OF THE DRAWINGS

In order that the advantages of the subject matter may be more readily understood, a more particular description of the subject matter briefly described above will be rendered by reference to specific examples that are illustrated in the appended drawings. Understanding that these drawings depict only typical examples of the subject matter, they are not therefore to be considered to be limiting of its scope. The subject matter will be described and explained with additional specificity and detail through the use of the drawings, in which:

Figure 1 is a schematic block diagram of a tanker aircraft with an automated director light system, according to one or more examples of the present disclosure;
Figure 2 is a schematic, side view of an aircraft refuelling operation, according to one or more examples of the present disclosure;
Figure 3 is a schematic, perspective view of an aircraft refuelling operation, according to one or more examples of the present disclosure;
Figure 4 is a schematic view of an image of a portion of an aircraft, according to one or more examples of the present disclosure;
Figure 5 is a schematic flow diagram of a method of automatically controlling refuelling operations, according to one or more examples of the present disclosure; and
Figure 6 is a schematic flow diagram of a method of automatically controlling refuelling operations, according to one or more examples of the present disclosure.

## DETAILED DESCRIPTION

Reference throughout this specification to "one example," "an example," or similar language means that a particular feature, structure, or characteristic described in connection with the example is included in at least one example of the present disclosure. Appearances of the phrases "in one example," "in an example," and similar language throughout this specification may, but do not necessarily, all refer to the same example.

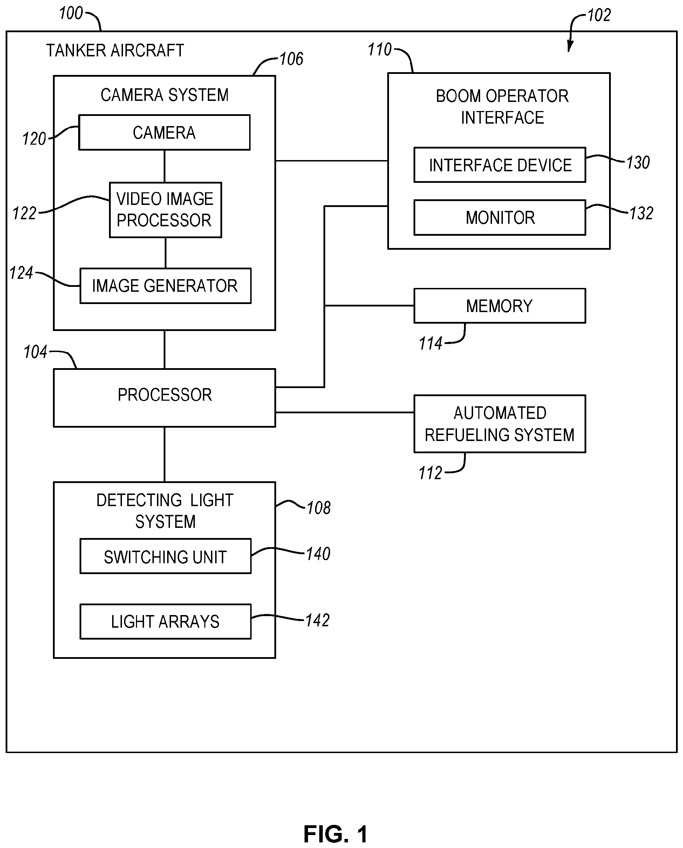

Disclosed herein is a refuelling system 102 located on a tanker aircraft 100 that provides a determination of whether a two-dimensional (2D) to three-dimensional (3D) pose estimation system is correct. This determination can be supplied to an aerial refuelling system for controlling output to receiver aircraft pilots, boom operators, and/or automated aerial refuelling components during aerial refuelling operations. As shown in Figure 1, the refuelling system 102 includes a processor 104, a camera system 106, a director light system 108 (e.g., directing light system), a boom operator interface 110, an automated refuelling system 112, and memory 114.

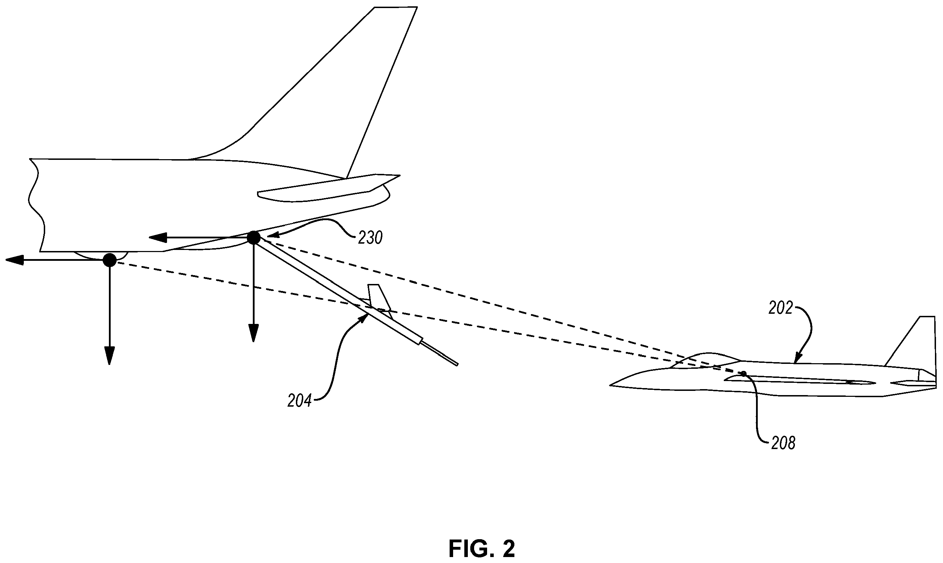

In various examples, referring to Figures 1 and 2, the camera system 106 includes a camera 120, a video image processor 122, and an image generator 124. The camera 120 is mounted to a fixed platform within a fared housing attached to the lower aft fuselage of the tanker aircraft 100. The camera 120 includes a lens or lenses having remotely operated focus and zoom capability. The camera 120 is located in an aft position relative to and below the tanker aircraft 100. The video image processor 122 receives digitized video images from the camera 120 and generates real-time 2D video images. The digitized video images include the objects viewed by the camera 120 within a vision cone. The image generator 124 then generates images for presentation to a boom operator.

In various examples, the boom operator interface 110 includes a user interface device 130 and a monitor 132. Images presented on the monitor 132 are based on information provided by the processor 104. The director light system 108 includes a switching unit 140 and an array of lights 142 (i.e., pilot director lights). The switching unit 140 controls activation of the array of lights 142 based on information provided by the processor 104. The automated refuelling system 112 controls operation of the refuelling boom 204 and/or the tanker aircraft 100 based on information provided by the processor 104.

In various examples, the array of lights 142 is located on the lower forward fuselage of the tanker aircraft 100. The array of lights 142 is positioned to be clearly viewable by the pilot of the receiver aircraft 202. The array of lights 142 include various lights for providing directional information to the pilot of the receiver aircraft 202. The array of lights 142 may include an approach light bar, an elevation light bar, a fore/aft position light bar, four longitudinal reflectors, two lateral reflectors, or other lights.

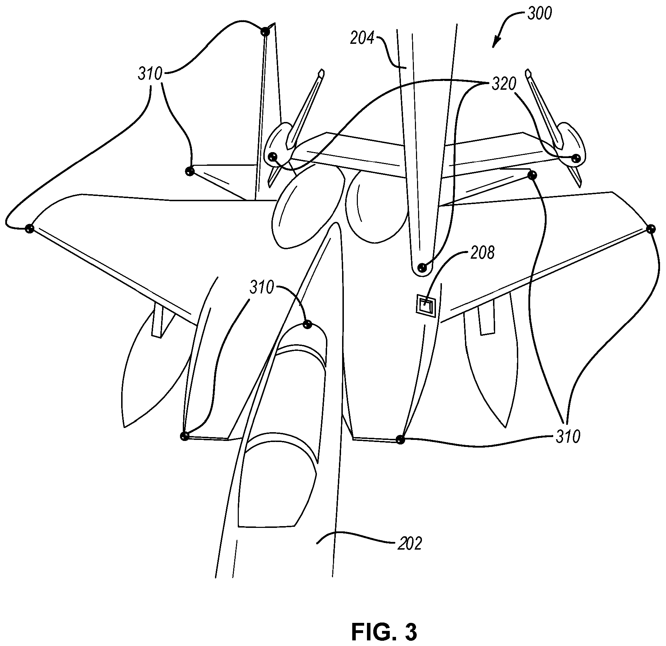

Referring to Figure 3, the camera system 106 produces a two-dimensional (2D) image 300 of a three-dimensional space including the refuelling boom 204 and the receiver aircraft 202. The 2D image 300 includes an approach zone the receiver aircraft 202 enters into prior to beginning refuelling operations. The receiver aircraft 202 includes a boom nozzle receiver 208 capable of coupling to the refuelling boom 204 in order to accomplish fuel transfer.

It can be appreciated that refuelling or close-quarter operations may occur between other vehicles not just the aircraft 100, 202 depicted. The refuelling or close-quarter operations may occur during adverse weather conditions. The vehicles may be any vehicles that move relative to each other (in water, on land, in air, or in space). The vehicles may also be manned or unmanned. Given by way of non-limiting example, in various examples, the vehicles may be a motor vehicle driven by wheels and/or tracks, such as, without limitation, an automobile, a truck, a cargo van, and the like. Given by way of further non-limiting examples, in various examples, the vehicles may include a marine vessel such as, without limitation, a boat, a ship, a submarine, a submersible, an autonomous underwater vehicle (AUV), and the like. Given by way of further non-limiting examples, the vehicles may include other manned or unmanned aircraft such as, without limitation, a fixed wing aircraft, a rotary wing aircraft, and a lighter-than-air (LTA) craft.

In various examples, non-transitory computer readable instructions (i.e., code) stored in the memory 114 (i.e., storage media) cause the processor 104 to use raw image data from a single sensor (i.e., the camera 120) and make the raw data scalable and cost effective to integrate into existing systems. In particular, the processor 104 predicts keypoints 310 (see, e.g., Figure 3) of the receiver aircraft 202 within the 2D image 300. The keypoints 310 are referenced in 2D space. The prediction is based on a trained deep neural network configured to estimate the pixel location of the keypoints of the refuelling boom 204 in the 2D image 300. The processor 104 then performs 2D to 3D correspondence, using a 3D point matching algorithm, by projecting the 2D keypoints 310 into 3D space. Each of the predicted 2D keypoints 310 are projected from 2D space to 3D space using a perspective-n-point (PnP) pose computation to produce a prediction of the refuelling boom 204 (i.e., a boom 6 degree-of-freedom (DOF) position (i.e., pose)). More generally, the PnP pose computation may produce any parameterization of an object to position it in 3D space. In the specific case of the boom 204, a set of more constrained parameters in the form of the boom control parameters (e.g., boom pitch and roll based on a boom attachment point 230) are produced.

In various examples, non-transitory computer readable instructions (i.e., code) stored in the memory 114 (i.e., storage media) cause the processor 104 to predict keypoints 310 (see, e.g., Figure 3) of the receiver aircraft 202 or keypoints 320 (see, e.g., Figure 2) of the boom 204 within the 2D image 300. The keypoints 310, 320 are referenced in 2D space.

In various examples, the processor 104 trains a convolutional neural network (CNN) to identify features/keypoints on the 3D model (computer aided design (CAD) model) from a 2D image. The CNN is based on residual network (ResNet) architecture. The CNN removes final pooling and fully connected layers of the architecture and replaces them with a series of deconvolutional and/or upsampling layers to return an output image matching the height and width of the input image with the number of keypoints matching a number channels. Each of the channels is considered to be a heatmap of where the keypoint is located in 2D image space. From the heatmap, the pixel at the center of the distribution represented by the heatmap is chosen to be the position of the keypoint (i.e., the 2D keypoint predictions).

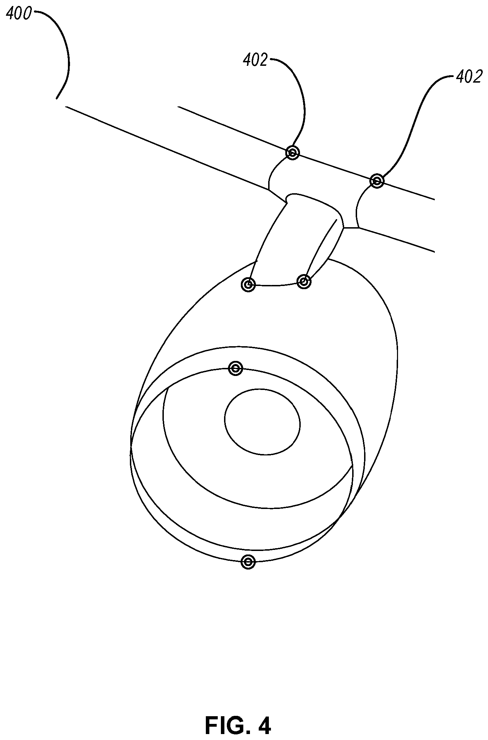

In various examples, referring to Figure 4, during training of the CNN, the detector (e.g., the CNN) takes as input an image 400, or in our case the rescaled bounding box crop of a video frame and returns as output a black and white heatmap image 402 for each keypoint. The heatmaps' pixel values indicate for each keypoint the likelihood of the 3D virtual object's keypoint being found at each pixel location of the image once the object has been projected onto the image. To train the weights of the CNN, ground truth heatmaps are constructed from ground truth 2D pixel locations. The pixel values of ground truth heatmaps are assigned the values of a Gaussian probability distribution over 2D coordinates with mean equal to the ground truth 2D pixel location and covariance left as a hyperparameter for training. The loss that is minimized during training is composed of the Jensen-Shannon divergence between the CNN's heatmap outputs and the ground truth heatmaps and the Euclidean norm between the CNN's 2D keypoint estimates and the ground truth 2D keypoints.

Each of the predicted 2D keypoints 310, 320 are compared with the corresponding 3D model keypoints using the PnP pose algorithm to produce a 6DOF pose estimate of the position of the receiver aircraft 202 or the refuelling boom 204. Then, the processor 104 analyzes the 6DOF pose estimate for potential error. The processor 104 produces a confidence or uncertainty value associated with the 6DOF pose estimate. First, the processor 104 determines a reprojection error. The reprojection error includes a reprojection error for the i-th keypoint estimate. The reprojection error is calculated as the 2D distance between the i-th estimated 2D keypoint and the 2D projection of the i-th 3D model keypoint, using the solved 6DOF pose.

$$\text{Reprojection Error for i}^{\text{th}} \text{ keypoint} = \widehat{k_i} - P(k_i, R, t)$$

$N$ - Number of keypoints

$\widehat{k_i}, i \in [N]$ - i-th 2D keypoint estimate, N total points

$k_i, i \in N$ - i-th 3D model estimate (corresponds to the i-th keypoint estimate), N total points

$P$ - Projection operator based on camera parameters

R, t - Rotation and translation pose parameters (6DOF)

M - Number of new keypoint sets to sample $\widetilde{k_i^j}, i \in [N], j \in [M]$ - i-th 2D keypont in j-th new sampled keypoint set, N total points in each set, M total sets of points

$R^j, t^j, j \in [M]$ - calculated pose parameters for j-th new sampled keypoint set, M total poses

$\lambda$ - 1D tuning factor, used in sampling

$\eta_i^j \sim N\left(\mu = \begin{bmatrix} 0 \\ 0 \end{bmatrix}, \Sigma = \begin{bmatrix} 1 & 0 \\ 0 & 1 \end{bmatrix}\right)$ - 2D Noise from a normal distribution with mean 0 and identity covariance matrix. $N*M$ total samples, Template notation for noise from a normal distribution.

\* - 1D multiplication or pointwise multiplication for vectors and matrices

$\hat{\Sigma}_i$ - 2D covariance matrix for i-th keypoint estimate

The reprojection error is used to sample a distribution of new sets of keypoints and calculate poses for sampled keypoint sets in order to form a distribution of 6DOF pose results. The processor 104 samples M new sets of keypoints. In order to sample the i-th keypoint in the j-th new set of keypoints, the processor 104 samples noise from a 2D normal distribution with 0 mean and identity covariance. Next, the processor 104 multiplies (i.e., scales) the sampled noise by the absolute value of the reprojection error and a scaling factor which is used to tune the result. The processor 104 then adds the scaled noise to the 2D keypoint estimate. This can be interpreted as sampling from a 2D normal distribution centered on the 2D keypoint estimate, with covariance scaled by the reprojection error.

$$\widetilde{k_i^i} = \left( n_i^j * \frac{1}{\lambda} * \left| \widehat{k_i} - P(k_i, R, t) \right| \right) + P(k_i, R, t)$$

$$\widetilde{k_i^i} \sim N\left( \mu = \widehat{k_i}, \ \Sigma = \frac{1}{\lambda} * \hat{\Sigma}_i * \| \widehat{k_i} - P(k_i, R, t) \| \right)$$

Next, from the M sampled keypoint sets, the processor 104 obtains M new 6DOF pose estimates. The M 6DOF pose estimates form a distribution of solutions from which the processor 104 calculates a 6DOF standard deviation to represent solution uncertainty. If there is a large variance in statistically plausible 6DOF estimates, then the magnitude of uncertainty should increase accordingly.

In various examples, the processor 104 tracks the 6DOF pose of an object over the course of a video using a Kalman filter. The processor 104 updates the Kalman filter with the most recent pose and uses the Kalman filter's resulting mean pose to calculate reprojection error. An extra Kalman filter may be used to smooth uncertainty output.

In various examples, the processor 104 produces 3D position of a specific point of interest on the 3D object, after being rotated and translated by the predicted 6DOF pose. The processor 104 tailors uncertainty estimation to the 3D point output. After running the PnP algorithm to obtain a sample pose for each sample keypoint set, the processor 104 uses the sample pose to rotate and translate the 3D object model to calculate a sample 3D point. The result is a distribution over the 3D point of interest. From that distribution, the processor 104 computes a 3D standard deviation to represent solution uncertainty.

In various examples, the processor 104 uses $\lambda$ = 3 and M = 128 sets of 2D keypoints. Other parameters may be used.

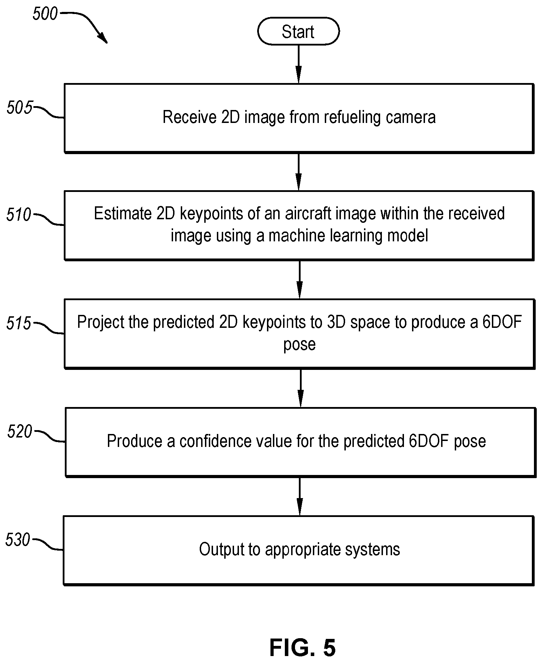

Referring to Figure 5, a method 500 includes outputting estimated position of a target object and a certainty value of the outputted estimated target object position. Block 505 of the method 500 includes receiving a 2D image from a refuelling camera. Block 510 of the method 500 includes estimating keypoints of an aircraft image within the received 2D image. Block 515 of the method 500 includes comparing the predicted 2D keypoints with the corresponding 3D model keypoints via PnP to produce a 6DOF pose of the aircraft image. Block 520 of the method 500 includes producing a confidence value for the 6DOF pose of the aircraft image. Block 530 of the method 500 includes outputting the 6DOF pose of the aircraft image and the confidence value to appropriate aircraft or refuelling systems.

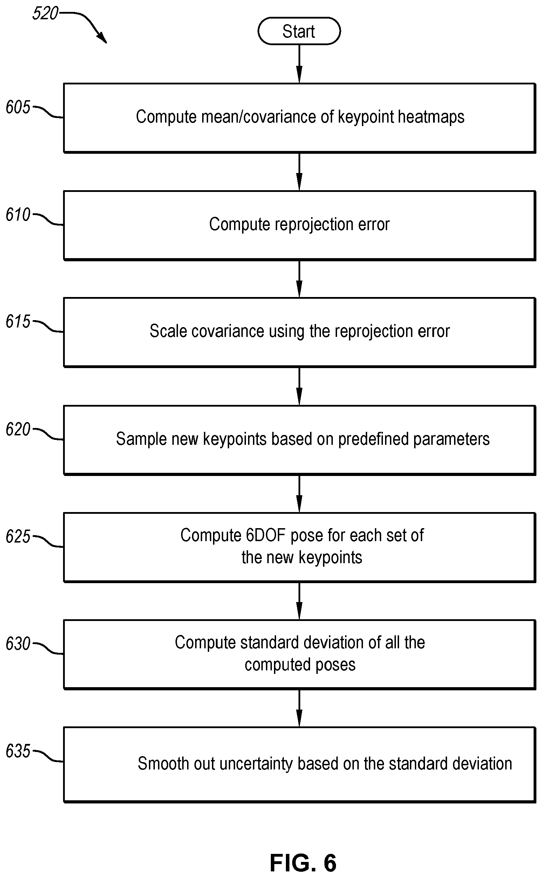

In some examples, the block 520 of the method 500 further includes various sub-steps, as shown in Figure 6. Block 605 includes computing mean/covariance of keypoint heatmaps. Block 610 includes computing reprojection error for each of the keypoints based on the PnP 6DOF solution. Block 615 includes scaling covariance from block 605 using the reprojection error. Block 620 includes sampling new keypoints based on predefined parameters. A block 625 includes computing a 6DOF pose for each set of new keypoints. Block 630 includes computing standard deviation of all the computed 6DOF poses. Finally, block 635 includes smoothing out the resulting uncertainty, based on the standard deviation from block 630, across time with a temporal filter.

As noted above, method 500 includes outputting the 6DOF pose of the aircraft image and the confidence value to appropriate aircraft or refuelling systems at block 530. These systems may include, for example, a computer system of an automated refuelling system 112, a display of a boom operator system 110, or a pilot director light system. The methods described herein may be used to indicate when the estimated 6DOF pose may be unreliable to automated system controllers or human operators. This is achieved by also providing an uncertainty value of the 6DOF pose. This allows downstream processes in the refuelling system to take appropriate action to avoid using the unreliable estimated 6DOF pose. For instance, within the context of aerial refuelling, an unreliable estimated 6DOF pose indicates uncertainty in the fuel receptacle's location relative to the refuelling boom 204 and hence that an attempt at refuelling may be unsafe. Detecting such an unsafe condition may result in an alert being generated.

The uncertainty value of the 6DOF pose may be compared to a threshold to determine when to generate an alert. An alert may be generated when the uncertainty value exceeds a threshold, or is equal to or greater than a threshold. The threshold may be calibrated for a pre-specified error tolerance. For example, returning to the example of aerial refuelling, the threshold may be calibrated for a pre-specified error tolerance on the 3D receptacle location estimate using a combination of simulated and real world test videos where ground truth receptacle locations are known. Also, different thresholds may be tuned for the uncertainty value to indicate when the uncertainty is greater than 2, 3, or 5 inches (5, 7.5, or 12.5 cm).

The methods described herein may generate a 3D vector representing the standard deviation of a 3D point estimate along each axis of 3D space. The Euclidean norm of this 3D vector is taken and used to represent the uncertainty as a single scalar value. This uncertainty value is then compared against the calibrated threshold described above to determine if the point of interest estimate within an estimated 3D pose is likely to exceed a pre-specified error tolerance. In some examples, the process for calculating an uncertainty threshold corresponding to a 5 inch (12.5 cm) error level maybe as described below.

For the calibration, the 3D point of interest estimate and uncertainty value are calculated for all frames in calibration test videos. Then, the Euclidian errors between the ground truth and the estimation of the point of interest in the test videos are calculated. The uncertainty value is then treated as a signal to be used in a binary detector which flags a positive result in instances when the Euclidian error is likely to exceed 5 inches (12.5 cm), and negative otherwise. The receiver operating characteristic (ROC) curve of the uncertainty value in this detection task is calculated, which represents the true positive and false positive rates for different uncertainty value thresholds. Then, a threshold is chosen from the ROC curve corresponding to a desired true positive and false positive rate. For example, the threshold may be selected to correspond to a 99% true positive rate. Then, during aerial refuelling, whenever the fuel receptacle's 3D location is estimated, a corresponding uncertainty value is calculated and checked against the calibrated threshold found offline from the ROC curve analysis. If the uncertainty value exceeds the threshold, the 3D point estimate is flagged as being unreliable, with an expected accuracy of this indicator to be correct in 99% of cases.

As explained above, an alert may be generated when the uncertainty value is determined to exceed the threshold. The alert may be used in any number of ways by the refuelling system. The alert may be notified to an operator, for example a visual, audible or tactile warning may be provided. A visual presentation of the alert may correspond to illuminating the lights of a director light system in a certain manner. Notifying the alert to the operator allows the operator to take appropriate action.

For example, when an operator is trying to establish a connection between a refuelling boom 204 and a fuel receptacle 208, notification of the alert may cause the operator to move the boom 204 further away from the receptacle 208 before trying to establish the connection once more when the uncertainty value has dropped below the threshold and the alert in no longer in place. Alternatively, the operator may abort the attempt to establish the connection altogether when the alert is notified.

In automated refuelling systems the alert may be used to effect automatic performance of the actions described above in respect of human operator. For example, the alert may be provided to a computer system of the refuelling system, and the computer system may be programmed to respond by moving the boom 204 further away from the receptacle 208 before trying to establish the connection once more when the uncertainty value has dropped below the threshold and the alert in no longer in place. Alternatively, the computer system may abort the attempt to establish the connection altogether in response to the alert. The computer system may also report its actions to an operator, and may provide a visual, audible or tactile notification of the alert or the remedial action taken in response to the alert.

The methods described herein may also be employed after a connection has been established between the refuelling boom 204 and the fuel receptacle 208. The boom 204 may be steered and may have an adjustable length (e.g. through telescoping) to accommodate relative movements between the tanker aircraft 100 and the receiver aircraft 202. The 6DOF pose of the fuel receptacle 208 may be monitored to ensure that the position of the fuel receptacle 208 remains within a volume that may be serviced by the refuelling boom 204. Providing an alert when the uncertainty value of the estimated 6DOF pose is therefore valuable in alerting an operator when the pose estimation is unreliable. In this case, the operator may move the boom 204 away from the receptacle 208, causing a disconnection. The operator may then attempt to re-establish the connection once the uncertainty value has dropped below the threshold and the alert in no longer in place, or may abort the refuelling altogether. Alternatively, the alert may be provided to a computer system of the refuelling system, which may be programmed to move the boom 204 away from the receptacle 208, causing a disconnection, and either attempting to re-establish the connection once the uncertainty value has dropped below the threshold/the alert in no longer in place, or aborting the refuelling altogether.

As noted above, the methods described herein may be used with refuelling or close-quarter operations between vehicles other than the aircraft 100, 202 depicted as described immediately above. The vehicles may be any vehicles that move relative to each other (in water, on land, in air, or in space), and may be manned or unmanned. Where refuelling is being performed, this may be done while the vehicles are in motion. Examples outside of refuelling include docking of one spacecraft to another and a spacecraft capturing a satellite or similar.

More general examples concern only one vehicle or no vehicles. Contemplated examples include methods where the target object, or a structure of which the target object is a part, is to be contacted, grasped or manipulated in some other way. Examples include capturing unmanned air vehicles, submarine docking, retrieving objects from water such as oceans, seas and rivers (including both floating and submerged objects), and robotic manipulation of workpieces.

Those skilled in the art will appreciate that the various illustrative logical blocks, modules, circuits, and algorithm steps described in connection with the examples disclosed herein may be implemented as electronic hardware, computer software, or combinations of both. Although various operational flows are presented in a sequence(s), it should be understood that, in some cases, the various operations may be performed in other orders than those which are illustrated or may be performed concurrently. Other examples will be readily apparent to those skilled in the art and changes to the described examples that come within the meaning of the claims are to be embraced within their scope.

## Claims

1. A method comprising:

   receiving a two-dimensional (2D) image (300) from a camera (120);
   determining 2D keypoints (310, 320) of a target object (202, 204) located within the 2D image (300) based on a predefined model of the target object (202, 204);
   estimating a 6 degrees-of-freedom (DoF) pose based on the 2D keypoints (310, 320) and a three-dimensional (3D) model of the target object (202, 204); and
   generating an uncertainty value of the 6 degrees-of-freedom pose; and
   the method further comprising:

   determining the 2D keypoints (310, 320) using a trained neural network configured to output keypoint heat maps (402), wherein pixel intensity values associated with each of the keypoint heat maps indicate a keypoint detection probability;
   computing covariance of each of the keypoint heat maps;
   computing reprojection errors as the 2D distance between the i-th estimated 2D keypoint and the 2D projection of the i-th 3D model keypoint, using the solved 6DOF pose;
   scaling the covariance of the keypoint heat maps based on the reprojection errors to produce scaled covariance;
   generating samples of new keypoints based on the scaled covariance; and
   generating a new 6 degrees-of-freedom pose based on the samples of new keypoints, wherein generating the uncertainty value comprises computing a standard deviation of the new 6 degrees-of-freedom pose; and
   a vehicle system using the uncertainty value of the 6 degrees-of-freedom pose to determine whether the uncertainty value exceeds a threshold thereby indicating unacceptable uncertainty in the estimated 6 degrees-of-freedom pose.

2. The method of claim 1, wherein generating the uncertainty value further comprises applying a smoothing algorithm to the standard deviation.

3. The method of claim 2, wherein the smoothing algorithm comprises a Kalman filter.

4. The method of any preceding claim, comprising the vehicle system issuing an alert when the uncertainty value exceeds the threshold.

5. The method of claim 4, wherein:

the camera (120) is part of a first vehicle;
the target object (202, 204) is a second vehicle or a part thereof; and
the vehicle system is a system for managing close-quarter operations between the first and second vehicles.

6. The method of claim 5, comprising the vehicle system manoeuvring automatically the first vehicle, or a part thereof, to increase separation of the first and second vehicles in response to the alert being issued.

7. The method of claim 5 or 6, wherein the first vehicle is a tanker vehicle, the second vehicle is a receiver vehicle to be refuelled by the tanker vehicle, and the target object (202, 204) is a fuel receptacle, and further comprising performing the method during a refuelling operation.

8. The method of claim 7, wherein the tanker vehicle is a tanker aircraft (100) and the second vehicle is a receiver aircraft (202) and the alert is used by an automated refuelling system (102), a boom operator system (110), or a pilot director light system (108).

9. The method of claim 7 or 8, wherein the refuelling operation is suspended or aborted in response to the alert being issued.

10. A system (102) comprising:

a camera (120) configured to generate a two-dimensional (2D) image (200) of an in-flight refuelling operation between a receiver aircraft (202) and a tanker aircraft (100);
a computer processor (104); and
non-transitory computer readable storage media (114) storing computer code that, when executed by the computer processor, causes the computer processor to perform the method of any preceding claim.

11. A tanker aircraft (100) comprising a refuelling boom (204) and the system of claim 10.


**Patentansprüche**

1. Verfahren, umfassend:

Empfangen eines zweidimensionalen (2D) Bilds (300) von einer Kamera (120);
Bestimmen von 2D-Schlüsselpunkten (310, 320) eines Zielobjekts (202, 204), das sich innerhalb des 2D-Bilds (300) befindet, basierend auf einem vordefinierten Modell des Zielobjekts (202, 204);
Schätzen einer Pose mit 6 Freiheitsgraden (DoF) basierend auf den 2D-Schlüsselpunkten (310, 320) und einem dreidimensionalen (3D) Modell des Zielobjekts (202, 204); und
Generieren eines Unsicherheitswerts der Pose mit 6 Freiheitsgraden; und
das Verfahren weiter umfassend:

Bestimmen der 2D-Schlüsselpunkte (310, 320) unter Verwendung eines trainierten neuronalen Netzes, das dazu konfiguriert ist, Schlüsselpunkt-Heatmaps (402) auszugeben, wobei die mit jeder der Schlüsselpunkt-Heatmaps verknüpften Pixelintensitätswerte eine Schlüsselpunkt-Erkennungswahrscheinlichkeit angeben;
Berechnen der Kovarianz jeder der Schlüsselpunkt-Heatmaps;
Berechnen von Reprojektionsfehlern als die 2D-Entfernung zwischen dem i-ten geschätzten 2D-Schlüsselpunkt und der 2D-Projektion des i-ten 3D-Modell-Schlüsselpunkts unter Verwendung der gelösten 6DOF-Pose;
Skalieren der Kovarianz der Schlüsselpunkt-Heatmaps basierend auf den Reprojektionsfehlern, um eine skalierte Kovarianz zu erzeugen;
Generieren von Abtastwerten neuer Schlüsselpunkte basierend auf der skalierten Kovarianz; und
Generieren einer neuen Pose mit 6 Freiheitsgraden basierend auf den Abtastwerten neuer Schlüsselpunkte,

wobei Generieren des Unsicherheitswerts Berechnen einer Standardabweichung der neuen Pose mit 6 Freiheitsgraden umfasst; und
ein Fahrzeugsystem, das den Unsicherheitswert der Pose mit 6 Freiheitsgraden verwendet, um zu bestimmen, ob der Unsicherheitswert einen Schwellenwert überschreitet, wodurch eine inakzeptable Unsicherheit in der geschätzten Pose mit 6 Freiheitsgraden angegeben wird.

**2.** Verfahren nach Anspruch 1, wobei Generieren des Unsicherheitswerts weiter Anwenden eines Glättungsalgorithmus auf die Standardabweichung umfasst.

**3.** Verfahren nach Anspruch 2, wobei der Glättungsalgorithmus einen Kalman-Filter umfasst.

**4.** Verfahren nach einem vorstehenden Anspruch, das umfasst, dass das Fahrzeugsystem eine Warnung ausgibt, wenn der Unsicherheitswert den Schwellenwert überschreitet.

**5.** Verfahren nach Anspruch 4, wobei:

die Kamera (120) Teil eines ersten Fahrzeugs ist;
das Zielobjekt (202, 204) ein zweites Fahrzeug oder ein Teil davon ist; und
das Fahrzeugsystem ein System zum Verwalten von Vorgängen aus der Nähe zwischen dem ersten und dem zweiten Fahrzeug ist.

**6.** Verfahren nach Anspruch 5, das umfasst, dass das Fahrzeugsystem das erste Fahrzeug oder einen Teil davon automatisch manövriert, um einen Abstand zwischen dem ersten und dem zweiten Fahrzeug als Reaktion darauf zu vergrößern, dass die Warnung ausgegeben wird.

**7.** Verfahren nach Anspruch 5 oder 6, wobei das erste Fahrzeug ein Tankfahrzeug ist, das zweite Fahrzeug ein Empfängerfahrzeug ist, das vom Tankfahrzeug betankt werden soll, und das Zielobjekt (202, 204) ein Kraftstoffbehälter ist, und es weiter Durchführen des Verfahrens während eines Betankungsvorgangs umfasst.

**8.** Verfahren nach Anspruch 7, wobei das Tankfahrzeug ein Tankflugzeug (100) ist und das zweite Fahrzeug ein Empfängerflugzeug (202) ist und die Warnung von einem automatischen Betankungssystem (102), einem Auslegerbediensystem (110) oder einem Pilotlichtleitsystem (108) verwendet wird.

**9.** Verfahren nach Anspruch 7 oder 8, wobei der Betankungsvorgang als Reaktion darauf unterbrochen oder abgebrochen wird, dass die Warnung ausgegeben wird.

**10.** System (102), umfassend:

eine Kamera (120), die dazu konfiguriert ist, ein zweidimensionales (2D) Bild (200) eines Betankungsvorgangs während des Flugs zwischen einem Empfängerflugzeug (202) und einem Tankflugzeug (100) zu generieren;
einen Computerprozessor (104); und
nichtflüchtige computerlesbare Speichermedien (114), die Computercode speichern, der, wenn er von dem Computerprozessor ausgeführt wird, den Computerprozessor veranlasst, das Verfahren nach einem vorstehenden Anspruch durchzuführen.

**11.** Tankflugzeug (100), das einen Betankungsausleger (204) und das System nach Anspruch 10 umfasst.

**Revendications**

**1.** Procédé comprenant :

la réception d'une image bidimensionnelle (2D) (300) provenant d'une caméra (120) ;
la détermination de points clés 2D (310, 320) d'un objet cible (202, 204) situé dans l'image 2D (300) sur la base d'un modèle prédéfini de l'objet cible (202, 204) ;
l'estimation d'une pose à 6 degrés de liberté (DoF) sur la base des points clés 2D (310, 320) et d'un modèle tridimensionnel (3D) de l'objet cible (202, 204) ; et
la génération d'une valeur d'incertitude de la pose à 6 degrés de liberté ; et
le procédé comprenant en outre :

la détermination des points clés 2D (310, 320) en utilisant un réseau neuronal entraîné configuré pour sortir des cartes thermiques de points clés (402), dans lequel les valeurs d'intensité de pixels associées à chacune des cartes thermiques de points clés indiquent une probabilité de détection de points clés ;
le calcul de la covariance de chacune des cartes thermiques de points clés ;

le calcul d'erreurs de reprojection comme la distance 2D entre le i-ième point clé 2D estimé et la projection 2D du i-ième point clé de modèle 3D, en utilisant la pose à 6DOF résolue ;

la mise à l'échelle de la covariance des cartes thermiques de points clés sur la base des erreurs de reprojection pour produire une covariance mise à l'échelle ;

la génération d'échantillons de nouveaux points clés sur la base de la covariance mise à l'échelle ; et

la génération d'une nouvelle pose à 6 degrés de liberté sur la base des échantillons de nouveaux points clés,

dans lequel la génération de la valeur d'incertitude comprend le calcul d'un écart-type de la nouvelle pose à 6 degrés de liberté ; et

un système de véhicule utilisant la valeur d'incertitude de la pose à 6 degrés de liberté pour déterminer si la valeur d'incertitude dépasse un seuil indiquant ainsi une incertitude inacceptable dans la pose à 6 degrés de liberté estimée.

2. Procédé selon la revendication 1, dans lequel la génération de la valeur d'incertitude comprend en outre l'application d'un algorithme de lissage à l'écart-type.

3. Procédé selon la revendication 2, dans lequel l'algorithme de lissage comprend un filtre de Kalman.

4. Procédé selon une quelconque revendication précédente, comprenant le système de véhicule émettant une alerte lorsque la valeur d'incertitude dépasse le seuil.

5. Procédé selon la revendication 4, dans lequel :

la caméra (120) fait partie d'un premier véhicule ;

l'objet cible (202, 204) est un second véhicule ou une partie de celui-ci ; et

le système de véhicule est un système de gestion d'opérations rapprochées entre les premier et second véhicules.

6. Procédé selon la revendication 5, comprenant le système de véhicule manœuvrant automatiquement le premier véhicule, ou une partie de celui-ci, pour augmenter la séparation des premier et second véhicules en réponse à l'émission de l'alerte.

7. Procédé selon la revendication 5 ou 6, dans lequel le premier véhicule est un véhicule-citerne, le second véhicule est un véhicule récepteur devant être ravitaillé par le véhicule-citerne, et l'objet cible (202, 204) est un réceptacle de carburant, et comprenant en outre la mise en œuvre du procédé pendant une opération de ravitaillement.

8. Procédé selon la revendication 7, dans lequel le véhicule-citerne est un avion-citerne (100) et le second véhicule est un avion récepteur (202) et l'alerte est utilisée par un système de ravitaillement automatisé (102), un système d'opérateur de perche (110) ou un système de feux de guidage de pilote (108).

9. Procédé selon la revendication 7 ou 8, dans lequel l'opération de ravitaillement est suspendue ou abandonnée en réponse à l'émission de l'alerte.

10. Système (102) comprenant :

une caméra (120) configurée pour générer une image bidimensionnelle (2D) (200) d'une opération de ravitaillement en vol entre un avion récepteur (202) et un avion-citerne (100) ;

un processeur informatique (104) ; et

des supports de stockage non transitoire lisibles par ordinateur (114) stockant un code informatique qui, lorsqu'il est exécuté par le processeur informatique, amène le processeur informatique à mettre en œuvre le procédé selon une quelconque revendication précédente.

11. Avion-citerne (100) comprenant une perche de ravitaillement (204) et le système selon la revendication 10.

**FIG. 1**

**FIG. 2**

FIG. 3

**FIG. 4**

*500*

Start

*505* Receive 2D image from refueling camera

*510* Estimate 2D keypoints of an aircraft image within the received image using a machine learning model

*515* Project the predicted 2D keypoints to 3D space to produce a 6DOF pose

*520* Produce a confidence value for the predicted 6DOF pose

*530* Output to appropriate systems

**FIG. 5**

FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2022212811 A

**Non-patent literature cited in the description**

- CullNet: Calibrated and Pose Aware Confidence Scores for Object Pose Estimation. **GUPTA KARTIK et al.** 2019 IEEE/CVF International Conference on Computer Vision Workshop (ICCVW). IEEE, 27 October 2019, 2758-2766